# EUROPEAN PATENT SPECIFICATION

(11) **EP 1 872 896 B1**
(45) Date of publication and mention of the grant of the patent: **04.03.2009**
(21) Application number: 07397018.8
(22) Date of filing: 06.06.2007
(51) Int. Cl.: B23P 15/28, B23P 15/40, B26D 1/00, B23B 27/14

(54) **A method for producing a sharp-edged tool**
Verfahren zur Herstellung eines scharfkantigen Werkzeugs
Procédé de fabrication d'un outil à arêtes vives

(30) Priority: 28.06.2006 FI 20060281 U
(43) Date of publication of application: 02.01.2008
(73) Proprietor: Metso Minerals, Inc., 00101 Helsinki (FI)
(72) Inventor: Uusitalo, Mikko, 33730 Tampere (FI)
(74) Representative: Eriksson, Svante Johan Christer

(56) References cited:
- DE-A1- 4 313 154
- FR-A1- 2 866 256
- US-A- 4 428 260
- US-A1- 2001 023 558
- US-B1- 6 453 899
- HUNZIKER-JOST W: "WASSER SCHNEIDET SCHARF" ZWF ZEITSCHRIFT FUR WIRTSCHAFTLICHE FERTIGUNG UND AUTOMATISIERUNG, CARL HANSER VERLAG. MUNCHEN, DE, vol. 86, no. 6, 1 June 1991 (1991-06-01), pages S81-S86, XP000205061 ISSN: 0947-0085

## Description

This invention refers to a method for producing a sharp-edged tool having sharp edges of a different material than the material of tool body, according to the preamble of claim 1. Such a method is known from US-A-4 428 260.

It is known to use sharp-edged tools in different kinds of implements. Sharp-edged tools are used in cutters, crushers, grinders, and other implements in which material is degraded by cutting. The sharpness of the cutting edge is important for the effectiveness and energy consumption of a process and often also for the quality of the end product. The edges will be worn during use and hereby the effectiveness of the process will drop, the energy consumption will rise and the end product will fall-off in quality. It is known to use hard, tough and wear-resistant materials in cutting edges so that the edges will remain sharp for a long time in the process.

A known sharp-edged and wear-resistant tool is formed in its entirety of a hard and wear-resistant material. A drawback of these tools is that the materials to be used are amply alloyed and for that reason expensive. Further, machining of said hard materials is expensive and difficult simultaneously as they have a low toughness.

Another type of known sharp-edged tools is provided with a coated cutting edge, for instance made by weld coating and then machined or grinded to be sharp. Hereby a hard and expensive material is used only in portions requiring wear-resistance. Other portions of the tool are made of tough material, and the susceptibility to damages of such a piece is lower than for a piece made in its entirety of hard material. Manufacture of sharp cutting edges by welding is however difficult. Not very sharp edges can be formed from a welding melt. Grinding of a formed round edge to be sharp is very time consuming and expensive. Further the base material will become strongly hot when welding close to an edge, so welding energy must be reduced and productivity of the welding process must be decreased.

US-A-4 428 260 discloses a method of forming a cutting edge on a bar of a first material and having a rectangular cross section. A groove is machined in the upper surface of said bar adjacent to and spaced from one side surface of said bar, and having a common arcuate surface with said bar. Said groove is then filled with a second material relatively harder than the first material, by using a plasma arc welding process. The side surface adjacent to said groove is milled off until the groove is exposed, after which the milled side is grinded in order to form a sharp corner with the upper surface of the bar. This is a very material and time consuming method.

The DE 4313154 Al discloses a method for producing cutting elements for boring or parting-off tools made of sintered metal with incorporated diamond grains which are exposed at the cutting edge of the cutting element, so that parts of the diamond grains project above the base material (the sintered metal) at the cutting edge. The cutting elements are cut out from sintered metal plates provided with incorporated diamond grains. In order to obtain cutting elements provided at their cutting surface with a sintered metal area with incorporated diamond grains, the sintered metal plate is cut by a high pressure liquid jet to which is added a granular material. This method is intended to provide a cutting edge with projecting diamond grains, and not a sharp but even cutting edge.

The object of the present invention is to provide a simpler and more economic method for producing a sharp-edged tool with improved properties. This object is reached with a method according to claim 1. A hard and wear-resistant material is coated as at least one welding bead of a desired geometry upon the surface of a tough base material, and cutting the coated base material by water cutting along said welding bead, to receive a sharp edge without chipping or machining. The base material can simultaneously be water cut to pieces of desired shape. Coating the hard and wear-resistant material upon the surface of the base material is preferably carried out by welding, such as by arc welding, gas welding or beam welding or possibly by thermal spraying or by brazing.

According to a preferred embodiment the coated base material is water cut along the middle line of said welding bead, whereby two sharp edges of different tools are received from each welding bead without chipping or machining. In this way the consumption of hard and expensive material to be used in the cutting edge is minimized. Welding can be carried out with a high effect because on welding at the middle of the base material heating up of the base will not cause so much problems as on welding close to an edge.

The sharp-edged tool produced according to the invention has a desired structure, i.e. it comprises a tough body having the shape of a plate, a bar, or a profile, and a cutting edge of a hard and wear-resistant material. The structure is obtained without chipping or abrasive machining. In producing long sharp-edged tools according to the invention parallel welding beads are welded at desired distances from each other upon the surface of a plate intended to form the tool bodies and the formed welding beads are water cut in two along their middle lines and also the surfaces between the welding beads are water cut along their middle lines, if tools having one sharp edge are desired. If the object is a tool having a sharp edge at two opposite edges the region between the welding beads is not cut. The tool according to the invention may be provided with sharp edges at four of its edges. Hereby a grid having squares with a size and shape corresponding to the tool to be produced is welded upon the surface of the plate intended to be the body of the tools, and the plate is water cut along the welding beads of the grid so that each tool cut free is provided with sharp edges at four of its edges.

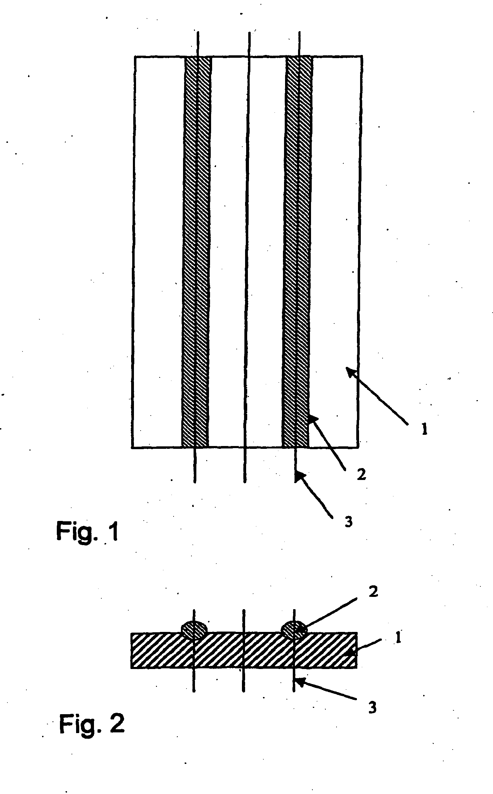

Below the invention will be described in more detail with reference to the enclosed drawings, wherein
Fig. 1 shows a welded plate with water cutting lines from above;
Fig. 2 shows a cross section of the plate according to Fig. 1;
Fig. 3 shows a water cut plate, form above;
Fig. 4 shows a cross section of the water cut plate;
Fig. 5 shows an example of a cross section of a plate before welding;
Fig. 6 shows, as a cross section, examples of grooves made in the surface of a plate;
Fig. 7 shows an explanatory sketch of a welded plate provided with a water cutting configuration for producing tools provided with a sharp edge at four of its edges, and
Fig. 8 shows a top view of a tool provided with a sharp edge at four of its edges.

A tool 5 produced according to the invention comprises a body 1 of a tough material and welding beads 2 of hard and wear-resistant material welded upon the surface of said body 1, which tool 5 has been removed from a plate forming the body 1 by water cutting along water cutting lines 3 following the middle line of at least one welding bead 2, whereby a sharp edge 4 is formed at the tool 5 without any machining. It is also possible that several beads of different materials are welded upon each other in order to optimize the sharpness profile of the body 1 and the welding beads 2. It may be advantageous that a material with hardness between the hardness of the base material 1 and the hardness of the material of the outer welding bead 2 is used as an intermediate layer.

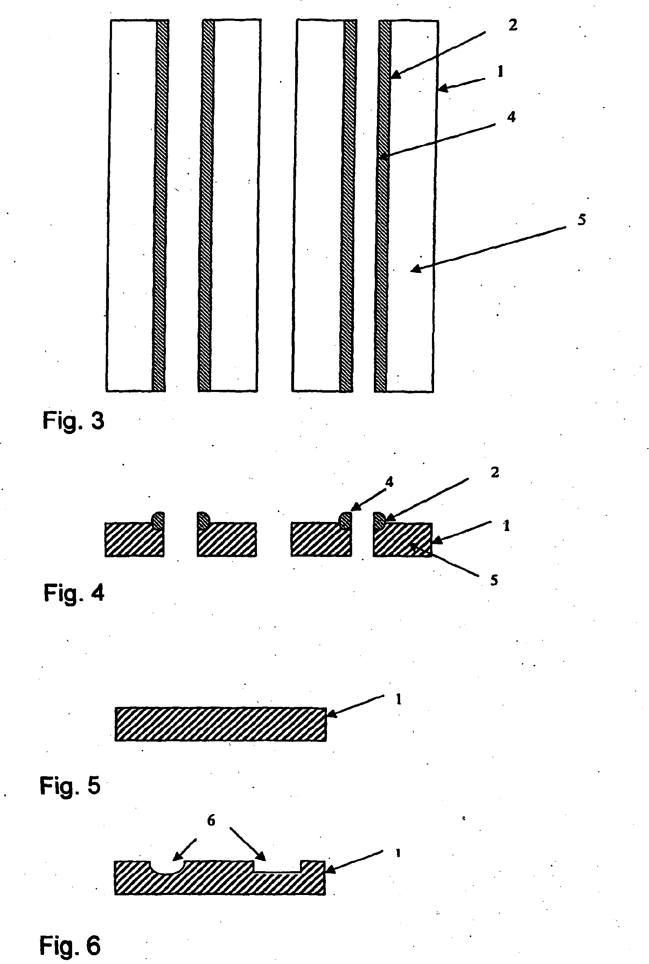

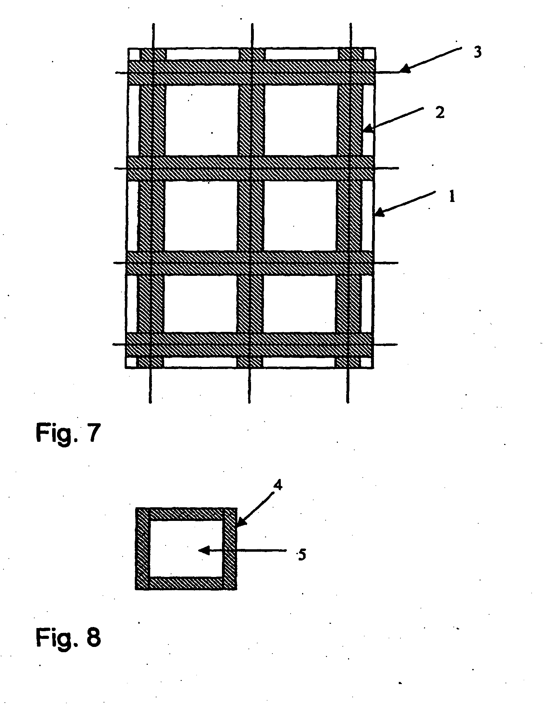

In Fig. 3 and 4 tools 5 are shown having a sharp edge 4 of an added welding material 2 at one edge thereof and in Fig. 8 an example of a tool 5 is shown having a sharp edge 4 of an added welding material 2 at four of its edges. Such a tool having a sharp edge at four of its edges can be used for instance as an interchangeable part in a drum crusher to be used for fuel disintegration.

The method according to the invention is very useful for producing tools 5 having sharp edges 4 of a hard and wear-resistant material but a body 1 of a tougher and cheaper material. The material of the sharp edge 4 may for instance be a wear resistant material containing carbides of wolfram, vanadium, chromium, niobium, titanium, or iron, or another material having good wear resisting properties. The body 1 may be of a cheaper material, for instance structural steel, heat refined steel, boron steel, stainless steel or another suitable material chosen for an application. In order to provide welding beads any welding or coating method can be used, for instance arc welding, gas welding or a beam welding method or thermal spraying or brazing.

The mixing of added welding material 2 to the body 1, the adhesive strength and the hardness of the welding beads 2 can be controlled by means of welding parameters. By increasing input of heat the mixing can be increased and the adhesion and toughness of the welding beads can be improved, but simultaneously the hardness of the welding beads 2 will decrease. In some cases machining of grooves according to Fig. 6 into the surface of the body 1 may be advantageous, which grooves are filled with added welding material 2. Hereby the surface of finished welding beads will not extend considerably above the surface of the finished tool 5, and also the adhesion of the welding bead 2 to the material of the body 1 will increase.

Above the most preferable embodiments of the invention are described. However the invention is not limited only to these embodiments, but it may change in different ways within the scope of the invention as defined by the claims.

## Claims

1. A method for producing a sharp-edged tool (5) having sharp edges (4) of a different material than the material of tool body (1), **characterized in that** a hard and wear-resistant material (2) is coated as at least one welding bead of a desired geometry upon the surface of a tough base material, and the coated base material is cut by water cutting along said welding bead (2) to receive a sharp edge (4) without chipping or machining.

2. The method according to claim 1, **wherein** the coated base material is water cut along the middle line of said welding bead (2) whereby two sharp edges (4) of different tools (5) are received from each welding bead (2) without chipping or machining.

3. The method according to claim 1, wherein the hard and wear-resistant material (2) is coated as a welding bead upon the surface of the base material by welding, such as arc welding, gas welding or beam welding, or by thermal spraying or brazing.

4. The method according to claim 2, wherein two or several parallel welding beads (2) are coated upon the surface of a tough plate shaped base material and the coated base material is water cut along the middle line of the welding beads (2), whereby tools (5) provided with two sharp edges (4) at opposite edges is received.

5. The method according to claim 2, wherein two or several parallel welding beads (2) are coated upon the surface of a tough plate shaped base material, and the coated base material is water cut along the middle line of the welding beads (2) and along the middle lines of the base material between the welding beads (2), whereby sharp-edged tools (5) are received with one sharp edge (4) each.

6. The method according to claim 1, wherein a grid having squares with a size and shape corresponding to the tools (5) to be produced is welded upon the surface of a plate intended to be the body (1) of the tools, and the plate is water cut along the welding beads (2) of the grid, whereby each tool (5) cut free is provided with sharp edges (4) at four of its edges.

7. The method according to any of the claims 1 to 6, wherein grooves (6) are machined into the surface of the base material at the intended positions for each welding bead (2) prior to coating.

## Patentansprüche

1. Verfahren zur Herstellung eines scharkantigen Werkzeuges (5), dessen scharfe Kanten aus einem anderem Material bestehen als der Körper (1) des Werkzeuges, **dadurch gekennzeichnet, dass** auf die Oberfläche eines zähen Grundmaterials ein hartes und verschleißbeständiges Material (2) als mindestens eine Schweißraupe von gewünschter Geometrie beschichtet wird, das beschichtete Grundmaterial durch Wasserschneiden entlang der besagten Schweißraupe (2) geschnitten wird, um eine scharfe Kante (4) ohne zerspanende oder spanabhebende Bearbeitung zu erhalten.

2. Verfahren nach Anspruch 1, bei welchem das beschichtete Grundmaterial entlang der Mittellinie der besagten Schweißraupe (2) wassergeschnitten wird, wobei von jeder Schweißraupe (2) zwei scharfe Kanten (4) veschiedener Werkzeuge (5) ohne zerspanende oder spanabhebende Bearbeitung erhalten werden.

3. Verfahren nach Anspruch 1, bei welchem das harte und verschleißbeständige Material (2) auf die Oberfläche des Grundmaterials als eine Schweißraupe durch Schweißung wie Lichtbogenschweißung, Gasschweißen oder Strahlschweißen, oder thermisches Spritzen oder Löten beschichtet wird.

4. Verfahren nach Anspruch 2, bei welchem auf die Oberfläche eines zähen plattenförmigen Grundmaterials zwei oder mehrere parallel verlaufende Schweißraupen beschichtet werden, und das beschichtete Grundmaterial entlang der Mittellinie der Schweißraupen (2) wassergechnitten wird, wobei Werkzeuge (5) mit jeweils einer scharfen Kante auf ihren gegenüberliegenden Kanten erhalten werden.

5. Verfahren nach Anspruch 2, bei welchem auf die Oberfläche eines zähen plattenförmigen Grundmaterials zwei oder mehrere parallel verlaufende Schweißraupen (2) beschichtet werden, und das beschichtete Grundmaterial entlang der Mittellinie der Schweißraupe (2) und entlang der Mittellinien des Grundmaterials zwischen den Schweißraupen (2) wasserschnitten wird, wobei Werkzeuge (5) mit jeweils einer scharfen Kante (4) erhalten werden.

6. Verfahren nach Anspruch 1, bei welchem ein Gitter, dessen Quadraten eine den herzustellenden Werkzeugen (5) entsprechende Größe und Gestalt aufweisen, auf die Oberfläche einer als Körper (1) des Werkzeuges vorgesehenen Platte geschweißt wird, und die Platte entlang der Schweißraupen (2) des Gitters wassergeschnitten wird, wobei jedes frei geschnittene Werkzeug (5) auf ihren vier Kanten mit jeweils einer scharfen Kanten (4) versehen ist.

7. Verfahren nach einem der Ansprüche 1 bis 6, bei welchem vor der Beschichtung auf die Oberfläche des Grundmaterials an der jeweils für eine Schweißraupe vorgesehene Position eine Nute bearbeitet wird.

## Revendications

1. Procédé de production d'un outil tranchant (5) comprenant des arêtes tranchantes (4) en un matériau différent du matériau du corps d'outil (1), **caractérisé en ce qu'**un matériau dur et résistant à l'usure (2) est déposé sous la forme d'au moins un cordon de soudure d'une géométrie désirée sur la surface d'un matériau de base résistant, et que le matériau de base revêtu est coupé par découpe par jet d'eau le long dudit cordon de soudure (2) afin d'obtenir une arête tranchante (4) sans burinage ou usinage.

2. Procédé selon la revendication 1, dans lequel le matériau de base revêtu est coupé par jet d'eau suivant la ligne centrale dudit cordon de soudure (2) de telle sorte que deux arêtes tranchantes (4) d'outils (5) différents sont obtenues à partir de chaque cordon de soudure (2) sans burinage ou usinage.

3. Procédé selon la revendication 1, dans lequel le matériau dur et résistant à l'usure (2) est déposé sous la forme d'un cordon de soudure sur la surface du matériau de base par soudage, tel que par soudage à l'arc, soudage autogène ou soudage par faisceau, ou par pulvérisation thermique ou brasage.

4. Procédé selon la revendication 2, dans lequel deux ou plusieurs cordons de soudure parallèles (2) sont déposés sur la surface d'un matériau de base résistant en forme de plaque et le matériau de base revêtu est coupé par jet d'eau suivant la ligne centrale des cordons de soudure (2), de telle sorte que des outils (5) comportant deux arêtes tranchantes (4) sur des bords opposés sont obtenus.

5. Procédé selon la revendication 2, dans lequel deux ou plusieurs cordons de soudure parallèles (2) sont déposés sur la surface d'un matériau de base résistant en forme de plaque et le matériau de base déposé est coupé par jet d'eau suivant la ligne centrale des cordons de soudure (2) et suivant les lignes centrales du matériau de base entre les cordons de soudure (2), de telle sorte que des outils coupants (5) sont obtenus avec, sur chacun, une arête tranchante (4).

6. Procédé selon la revendication 1, dans lequel une grille comportant des carrés avec une taille et une forme correspondant aux outils (5) à produire est soudée sur la surface d'une plaque destinée à former le corps (1) des outils, et la plaque est coupée par jet d'eau suivant les cordons de soudure (2) de la grille, de telle sorte que chaque outil (5) séparé par découpe présente des arêtes tranchantes (4) sur quatre de ses bords.

7. Procédé selon l'une quelconque des revendications 1 à 6, dans lequel des rainures (6) sont usinées sur la surface du matériau de base aux positions définies pour chaque cordon de soudure (2) avant dépôt.
